Europäisches Patentamt

European Patent Office

Office européen des brevets

(11) Numéro de publication : **0 088 976**
**B1**

(12) # FASCICULE DE BREVET EUROPÉEN

(45) Date de publication du fascicule du brevet :
05.06.85

(51) Int. Cl.⁴ : **A 47 J 43/044**

(21) Numéro de dépôt : 83102208.2

(22) Date de dépôt : 07.03.83

(54) Dispositif de fixation d'un appareil électroménager sur une platine de support.

(30) Priorité : 11.03.82 FR 8204093

(43) Date de publication de la demande :
21.09.83 Bulletin 83/38

(45) Mention de la délivrance du brevet :
05.06.85 Bulletin 85/23

(84) Etats contractants désignés :
AT BE CH DE GB IT LI NL SE

(56) Documents cités :
DE-B- 1 809 039
FR-A- 2 417 280
GB-A- 2 079 617
US-A- 2 891 745
US-A- 4 026 532

(73) Titulaire : **MOULINEX S.A.**
**7 à 15, rue Jules-Ferry**
**F-93171 Bagnolet (FR)**

(72) Inventeur : **Vielle, Dominique André**
**Société Moulinex rue Charles-Granger**
**F-72600 Mamers (FR)**

(74) Mandataire : **May, Hans Ulrich**
**Thierschstrasse 27**
**D-8000 München 22 (DE)**

**Description**

L'invention se rapporte à un dispositif de fixation d'un appareil électroménager sur une platine de support.

L'appareil électroménager concerné peut être, par exemple, un batteur. Quant à la platine, elle peut, par exemple, former partie d'un support tel que décrit dans la demande de brevet français n° 78 04838 déposée par la Demanderesse le 21 Février 1978 et publiée sous le n° 2 417 280.

L'invention concerne, plus précisément, un dispositif de fixation du genre comportant, d'une part, des moyens d'emboîtement d'une paroi de l'appareil électroménager avec une paroi de la platine et, d'autre part, un verrou adapté à immobiliser ledit appareil sur la platine après la mise en œuvre desdits moyens d'emboîtement.

Dans les dispositifs de fixation connus de ce genre, le verrou est généralement constitué par une simple vis, comme, par exemple, dans le dispositif représenté dans la demande française précitée. De tels dispositifs à vis présentent l'inconvénient principal d'une mise en œuvre relativement longue, ce qui interdit les opérations répétées de mise en place et d'enlèvement de l'appareil sur la platine.

L'invention a pour but de réaliser un dispositif qui permette une mise en place ou un enlèvement pratiquement instantané de l'appareil sur la platine, et qui assure cependant une fixation positive.

Dans un dispositif de fixation selon l'invention, les moyens d'emboîtement de la paroi de l'appareil électroménager avec la paroi de la platine comprennent au moins une patte solidaire de l'une desdites parois et dirigée parallèlement à cette paroi, ainsi qu'un logement qui est pratiqué dans l'autre paroi et dans lequel s'emboîte ladite patte lors d'un mouvement de coulissement de l'appareil sur la platine, tandis que le verrou comprend une butée montée mobile sur la platine transversalement à la direction dudit coulissement entre une position de verrouillage pour laquelle elle fait saillie de la platine et vient ainsi en prise avec un épaulement ménagé sur l'appareil pour empêcher tout coulissement de cet appareil sur la platine, et une position de libération pour laquelle elle est escamotée dans la platine et autorise ainsi le coulissement de l'appareil sur la platine et donc le déboîtement de la patte hors de son logement.

Les caractéristiques et avantages de l'invention ressortiront d'ailleurs de la description qui va suivre, à titre d'exemple, en référence aux dessins annexés, dans lesquels :

la figure 1 représente, partiellement en élévation et partiellement en coupe verticale, un batteur électroménager monté sur une platine de support au moyen d'un dispositif de fixation selon l'invention ;

la figure 2 est une vue de dessus de la platine de support, après enlèvement du batteur ;

la figure 3 représente la platine de support partiellement en élévation et partiellement en coupe verticale selon la ligne III-III de la figure 2 ;

la figure 4 est une vue de dessus de la pièce constituant le verrou.

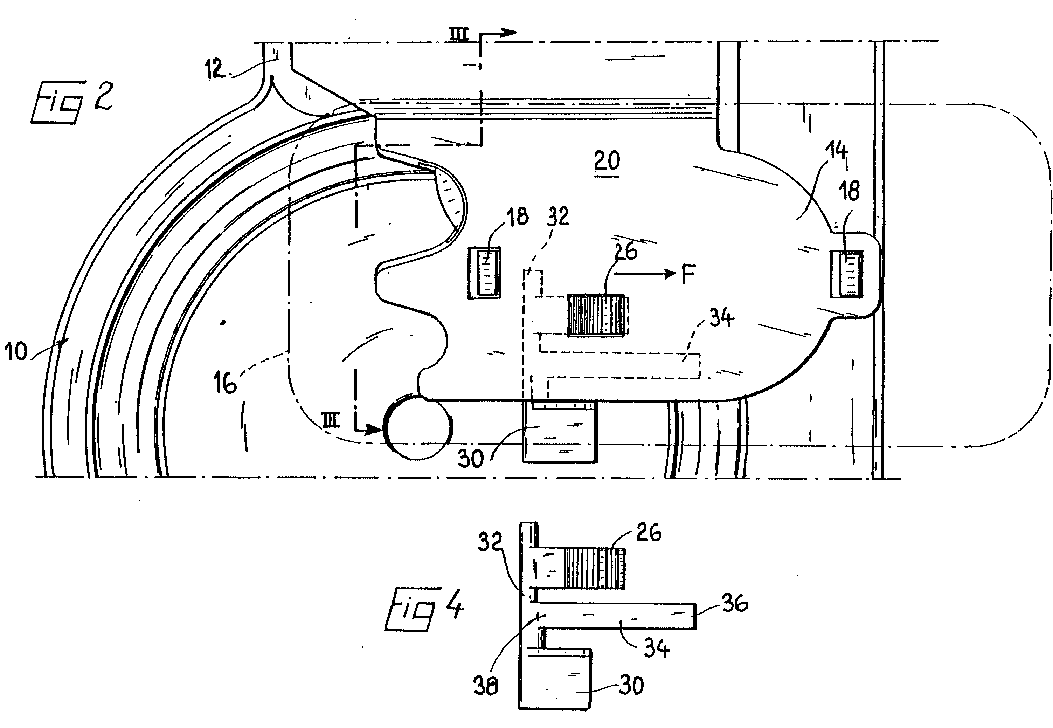

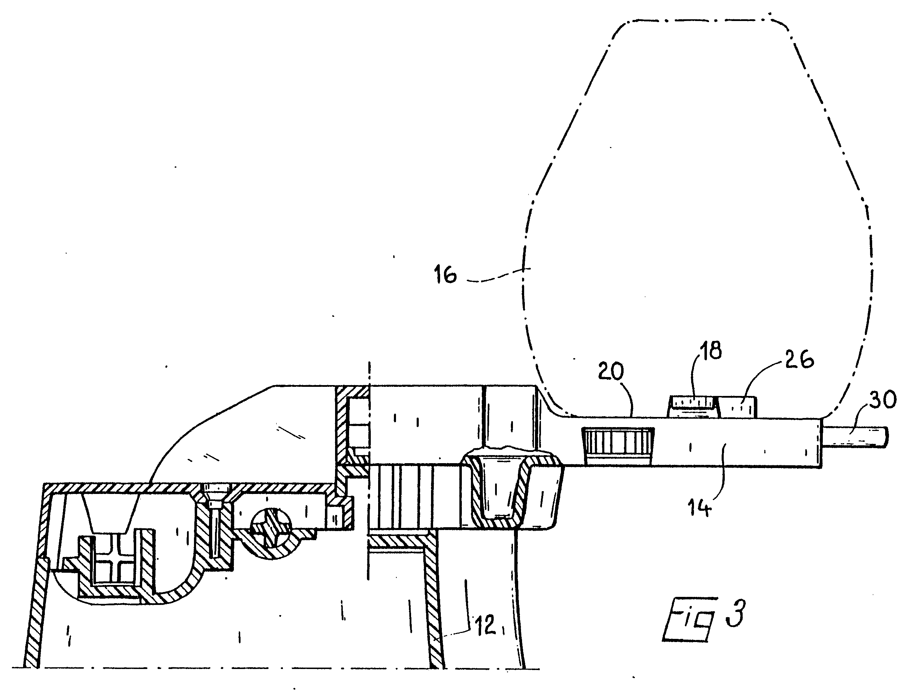

Le support de batteur représenté (voir figures 2 et 3) comprend un socle 10 de réception d'un bol de travail et une colonne 12 s'élevant de ce socle et portant en son sommet une platine 14 qui reçoit le batteur 16. Ce batteur est retenu sur la platine 14 au moyen d'un dispositif de fixation selon l'invention.

Ce dispositif de fixation comprend deux pattes d'emboîtement espacées 18 solidaires de la paroi supérieure 20 de la platine et dirigées parallèlement à cette paroi, ainsi que deux logements 22 qui sont pratiqués dans la paroi inférieure 24 du batteur 16 et dans lesquels s'emboîtent les pattes 18 lors d'un mouvement de coulissement du batteur sur la platine 14 dans le sens de la flèche F.

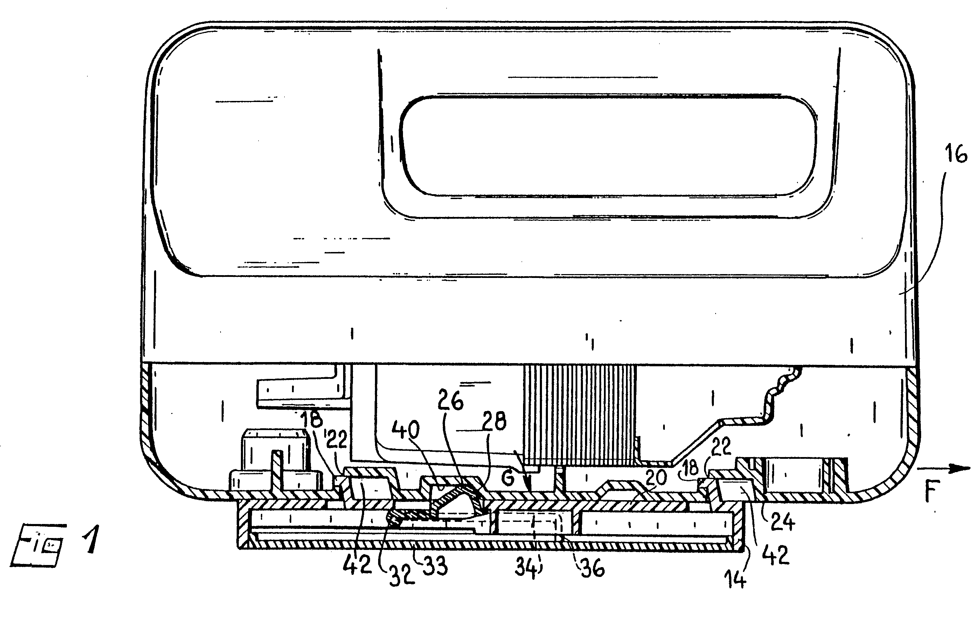

Le dispositif de fixation comprend en outre, dans l'espace entre les pattes d'emboîtement 18, un verrou destiné à immobiliser le batteur 16 après la réalisation de l'emboîtement par coulissement. Ce verrou comprend une butée 26 montée mobile sur la platine 14, transversalement à la direction dudit coulissement, entre une position de verrouillage (fig. 1), pour laquelle elle fait saillie de la platine 14 et vient ainsi en prise avec un épaulement 28 ménagé sur le batteur 16 pour empêcher alors tout coulissement de ce batteur sur la platine, et une position de libération, pour laquelle elle est escamotée dans la platine 14 et autorise ainsi le coulissement du batteur sur cette platine et donc le déboîtement des pattes 18 hors de leurs logements 22 (ceci par un mouvement en sens inverse de la flèche F).

La butée 26 est montée pivotante dans la platine 14 autour d'un axe parallèle à la paroi supérieure 20 de cette platine. Cette butée est solidaire d'une manette 30 qui fait saillie latéralement à la platine 14 et sur laquelle on peut agir pour amener cette butée à sa position de libération. Cette manette 30 et la butée 26 sont liées rigidement l'une à l'autre par un arbre 32 formant l'axe de pivotement et agencé à cet effet de manière à pouvoir tourner entre la paroi supérieure 20 et la paroi inférieure 33 de la platine.

Comme on le voit sur la figure 4, l'arbre 32, la butée 26 et la manette 30 sont constitués en une seule pièce de matière plastique obtenue par moulage. De cette même pièce forme également partie une lame 34 qui constitue un organe de rappel élastique de la butée 26 vers sa position de verrouillage : à cet effet, l'extrémité libre 36 de cette lame (voir traits interrompus de la figure 1) prend appui sur une portée ménagée sur la face interne de la paroi inférieure 33 de la platine 14, tandis que son autre extrémité 38 est, bien entendu, rigidement solidaire de l'arbre 32.

L'épaulement 28 ménagé sur le batteur 16, destiné à coopérer avec la butée 26, est constitué, comme on le voit sur la figure 1, par une zone de la surface latérale d'une dépression 40 pratiquée dans la paroi inférieure 24 du batteur 16.

Pour assurer la mise en place du batteur 16 sur la platine 14, il suffit de l'appliquer sur la face supérieure 20 de cette platine, en prenant soin d'engager les pattes 18 dans les deux cavités 42 où débouchent les logements 22, puis de faire coulisser ensuite légèrement le batteur sur la platine selon la flèche F ; lors de ce mouvement, la butée 26 s'efface d'abord à l'encontre de son organe de rappel 34 sous la pression exercée sur elle par la paroi inférieure 24 du batteur, puis elle s'engage d'elle-même dans la dépression 40 au moment où les pattes 18 s'emboîtent dans les logements 22, jusqu'à atteindre finalement la position de verrouillage illustrée à la figure 1.

Pour obtenir ensuite la libération du batteur, il suffit de faire tourner la butée 26 dans la direction de la flèche G (figure 1) au moyen de la manette 30, pour provoquer l'escamotage de cette butée, puis d'imprimer en même temps au batteur 16 un léger mouvement de coulissement par rapport à la platine 14, dans le sens inverse à la flèche F, pour provoquer le déboîtement des pattes 18 hors de leurs logements 22.

**Revendications**

1. Dispositif de fixation d'un appareil électroménager (16) sur une platine de support (14), comportant, d'une part, des moyens d'emboîtement d'une paroi (24) de l'appareil avec une paroi (20) de la platine et, d'autre part, un verrou adapté à immobiliser l'appareil (16) sur la platine (14) après la mise en œuvre desdits moyens d'emboîtement, caractérisé en ce que, d'une part, les moyens d'emboîtement comprennent au moins une patte (18) solidaire de l'une desdites parois (20) et dirigée parallèlement à cette paroi, ainsi qu'un logement (22) qui est pratiqué dans l'autre paroi (24) et dans lequel s'emboîte ladite patte (18) lors d'un mouvement de coulissement de l'appareil (16) sur la platine (14) et, d'autre part, le verrou comprend une butée (26) montée mobile sur la platine (14) transversalement à la direction dudit coulissement entre une position de verrouillage, pour laquelle elle fait saillie de la platine et vient ainsi en prise avec un épaulement (28) ménagé sur l'appareil pour empêcher tout coulissement de cet appareil sur la platine, et une position de libération, pour laquelle elle est escamotée dans la platine (14) et autorise ainsi le coulissement de l'appareil (16) sur la platine (14) et donc le déboîtement de la patte (18) hors de son logement (22).

2. Dispositif de fixation selon la revendication 1, caractérisé en ce que, la butée (26) étant montée pivotante dans la platine (14) autour d'un axe parallèle à la paroi (20) de la platine, cette butée est rappelée vers sa position de verrouillage par un organe élastique (34) interne à la platine (14) et est solidaire d'une manette (30) qui fait saillie latéralement à la platine (14) et sur laquelle on peut agir pour amener cette butée à sa position de libération.

3. Dispositif de fixation selon la revendication 2, caractérisé en ce que la butée (26) et la manette (30) sont liées rigidement l'une à l'autre par un arbre (32) formant l'axe de pivotement.

4. Dispositif de fixation selon la revendication 3, caractérisé en ce que, l'arbre (32) constituant avec la butée (26) et la manette (30) une pièce moulée unique de matière plastique, l'organe élastique de rappel (34) est constitué par une lame formant également partie de ladite pièce moulée et dont une extrémité (38) est solidaire dudit arbre (32) tandis que son autre extrémité (36) prend appui sur une portée ménagée à l'intérieur de la platine (14).

5. Dispositif de fixation selon l'une quelconque des revendications précédentes, caractérisé en ce que l'épaulement (28) est constitué par une zone de la surface latérale d'une dépression (40) pratiquée dans la paroi (24) de l'appareil (16).

6. Dispositif de fixation selon l'une quelconque des revendications précédentes, caractérisé en ce que, les moyens d'emboîtement comprenant deux pattes (18) espacées associées à deux logements (22) espacés, le verrou est agencé dans l'espace entre lesdites pattes (18).

**Claims**

1. A device for securing an electrical household appliance (16) to a supporting plate (14), comprising, on the one hand, interengaging means on a wall (24) of the appliance and a wall (20) of the supporting plate and, on the other hand, a locking mechanism for locking the appliance (16) to the supporting plate (14) when the interengaging means has become effective, characterized in that, on the one hand, the interengaging means comprise at least one foot (18) fixedly connected to one (20) of said walls and extending in parallel thereto and a seat (22) formed in the other wall (24), into which the foot (18) is pushed upon a shifting movement of the appliance (16) on the supporting plate (14) and, on the other hand, the locking mechanism comprises a stop (26) held on the supporting plate (14) transversely of the specified shifting direction so as to be movable between a locking position, in which it projects from the supporting plate and thus comes into engagement with a shoulder (28) formed on the appliance to thereby prevent any displacement of said appliance on the supporting plate, and a releasing position, in which it is flush with the supporting plate (14) to thereby allow release of the foot (18) from its seat (22).

2. A securing device as claimed in claim 1, characterized in that the stop (26) is held in the supporting plate (14) for pivotal movement about an axis extending in parallel to the wall (20) of the supporting plate and is pressed back into its locking position by means of a resilient element (34) disposed inside of the supporting plate (14), said stop being fixedly joined to a manual lever (30) protruding laterally from the supporting plate (14) and adapted to be manipulated to thereby move said stop to its releasing position.

3. A securing device as claimed in claim 2, characterized in that the stop (26) and the manual lever (30) are rigidly joined to each other by means of a shaft (32) forming said pivoting axis.

4. A securing device as claimed in claim 3, characterized in that the shaft (32) including the stop (26) and the manual lever (30) is an integrally moulded plastics article and that the resilient return element (34) is a leaf spring which also forms part of the moulded article, one end (38) of said spring being permanently joined to the shaft (32) while the other end (36) is supported by a bearing portion formed in the interior of the supporting plate (14).

5. A securing device as claimed in any of the preceding claims, characterized in that the shoulder (28) is constituted by a region of the side face of a depression (40) formed in the wall (24) of the appliance (16).

6. A securing device as claimed in any of the preceding claims, characterized in that the interengaging means comprise two mutually spaced feet (18) for cooperation with two mutually spaced seats (22), and the locking mechanism is disposed in the space intermediate said feet (18).

**Patentansprüche**

1. Vorrichtung zum Befestigen eines elektrischen Haushaltsgerätes (16) auf einer Tragplatte (14), die einerseits miteinander in Eingriff kommende Vorrichtungen einer Wand (24) des Gerätes und einer Wand (20) der Tragplatte und andererseits einen Riegel aufweist, der das Gerät (16) auf der Tragplatte (14) nach dem Wirksamwerden der Eingriffsvorrichtungen feststellt, dadurch gekennzeichnet, daß einerseits die miteinander in Eingriff kommenden Vorrichtungen mindestens einen Fuß (18), der mit einer der Wände (20) fest verbunden und parallel zu dieser Wand gerichtet ist, sowie einen in der anderen Wand (24) ausgebildeten Sitz (22) aufweisen, in den sich der Fuß (18) bei einer Verschiebungsbewegung des Gerätes (16) auf der Tragplatte (14) einschiebt, und andererseits der Riegel einen Anschlag (26) aufweist, der auf der Tragplatte (14) quer zu der angegebenen Verschiebungsrichtung zwischen einer Verriegelungsstellung, in der er von der Tragplatte vorspringt und so in Eingriff mit einer am Gerät ausgebildeten Schulter (28) kommt, um jede Verschiebung dieses Geräts auf der Tragplatte zu verhindern, und einer Freigabestellung beweglich gehalten ist, in welcher er in die Tragplatte (14) versenkt ist und so die Verschiebung des Gerätes (16) auf der Tragplatte (14) und damit die Freigabe des Fusses (18) aus seinem Sitz (22) ermöglicht.

2. Befestigungsvorrichtung nach Anspruch 1 dadurch gekennzeichnet, daß der Anschlag (26) in der Tragplatte (14) um eine zur Wand (20) der Tragplatte parallele Achse schwenkbargehalten ist und in seine Verriegelungsstellung durch ein innerhalb der Tragplatte (14) angeordnetes elastisches Element (34) zurückgedrückt wird und dieser Anschlag mit einem Handhebel (30) fest verbunden ist, der seitlich von der Tragplatte (14) vorsteht und auf den man einwirken kann, um diesen Anschlag in seine Freigabestellung zu bringen.

3. Befestigungsvorrichtung nach Anspruch 2 dadurch gekennzeichnet, daß der Anschlag (26) und der Handhebel (30) durch eine die Schwenkachse bildende Welle (32) starr miteinander verbunden sind.

4. Befestigungsvorrichtung nach Anspruch 3 dadurch gekennzeichnet, daß die Welle (32) mit dem Anschlag (26) und dem Handhebel (30) ein einziges aus Kunststoff geformtes Stück bildet und das elastische Rückstellelement (34) von einer Blattfeder gebildet ist, die ebenfalls einen Teil des Formstücks bildet und von der ein Ende (38) mit der Welle (32) fest verbunden ist, während ihr anderes Ende (36) sich an einer im Inneren der Tragplatte (14) ausgebildeten Auflage abstützt.

5. Befestigungsvorrichtung nach einem der vorangehenden Ansprüche dadurch gekennzeichnet, daß die Schulter (28) von einem Bereich der Seitenfläche einer Vertiefung (40) gebildet ist, die in der Wand (24) des Gerätes (16) ausgebildet ist.

6. Befestigungsvorrichtung nach einem der vorangehenden Ansprüche dadurch gekennzeichnet, daß die miteinander in Eingriff kommenden Vorrichtungen zwei in Abstand voneinander angeordnete Füße (18), die mit zwei in Abstand voneinander angeordneten Sitzen (22) zusammenwirken, aufweisen und der Riegel im Raum zwischen diesen Füßen (18) angeordnet ist.

Fig 1

16

0 088 976

26
40  28
18
22
G
20  18  22
24
42  32  33    34    36    14  42

F

Fig 2

12

III

20

14

18

18  32

26
F

10

16

34

III

30

0 088 976

Fig 4

32

26

36

34

38

30

Fig 3